# EUROPEAN PATENT SPECIFICATION

(11) **EP 1 934 989 B1**
(45) Date of publication and mention of the grant of the patent: **25.01.2012**
(21) Application number: 06806113.4
(22) Date of filing: 09.10.2006
(51) Int. Cl.: H01B 1/24, C08K 7/04, C08K 7/06, C08L 77/00

(54) **ELECTRICALLY CONDUCTIVE POLYAMIDE**
ELEKTRISCH LEITFÄHIGES POLYAMID
POLYAMIDE CONDUCTEUR ÉLECTRIQUE

(30) Priority: 11.10.2005 EP 05077319
(43) Date of publication of application: 25.06.2008
(73) Proprietor: DSM IP Assets B.V., 6411 TE Heerlen (NL)
(72) Inventor: GERTEISEN, Steven, Randall, Evansville, IN 47732 (US); SCHIRESON, Mark, Joseph, Evansville, IN 47732 (US); WENGER, Richard, Mark, Evansville, IN 47732 (US)
(74) Representative: Verhaegen, Ilse Maria M.
(86) International application number: PCT/EP2006/009734
(87) International publication number: WO 2007/042242

(56) References cited:
- WO-A2-2005/017038
- DE-A1- 10 259 499
- US-A1- 2003 055 154
- US-A1- 2003 116 757
- US-A1- 2004 082 729

## Description

The invention relates to a conductive polyamide composition.

Such a composition is known from WO 03/0935390. The composition there is in the form of an object the surface of which has been metal coated to make this surface conductive for electrostatic painting.

In automotive applications polyamide parts are often present in one object together and combined with metal parts. These metal parts are intrinsically conductive and fit for electrostatic painting. It is often desirable to paint the total object in the same process step and to that end the polyamide parts are also made conductive. It is also desirable to obtain painted polyamide parts that have the same appearance as the metal parts.

The known composition has as a drawback that the appearance of the coated and painted polyamide parts may differ from that of the metal parts.

Aim of the invention is to provide polyamide compositions and objects that can be electrostatically or electrolytically paintable and after painting have an appearance that is totally or nearly equal to that of painted metal parts.

This aim is achieved according to the invention in that the composition or object comprises a base polyamide, an electrically conductive additive and a polyamide oligomer, wherein the composition comprises from 0.5 to 20 wt.% polyamide oligomer relative to the total amount of base polyamide and oligomer and which conductive additive are carbon fibres with a diameter of between 3 and 20 microns.

This composition has appeared to be paintable with painting processes requiring conductivity of the composition and when painted to show a painted metal like appearance without surface defects.

Polyamide compositions comprising a conductive additive are known from US 2003/0055154. The compositions are said to be suitable for computer housings to shield the interior from electromagnetic waves. In this document it is reported that the presence of the conductive additive, usually carbon fibers, may cause surface irregularities since a considerable amount of the conductive additive is required to impart the desired conductivity. This problem is solved in this application by applying carbon fibres having specific dimensions.

In the present invention beside the polyamide and the conductive additive a polyamide oligomer is present. It was found that the presence of this oligomer gives a conductive composition having a certain rate of conductivity at a lower amount of conductive additive or allows to obtain a composition having a certain conductivity with less conductive additive. Thus the composition according to the invention provides sufficient conductivity for electrostatic or electrolytic painting at the same time preventing the occurrence of surface defects.
Suitable base polyamides in the composition according to the invention include the aliphatic polyamides, that may eventually be branched polyamides, such as polyamide-6, polyamide-4,6, polyamide-6,6, polyamide-11, polyamide-12, semi aromatic polyamides as e.g. MXD6, polyamide-6,I/6,T, polyamide-6,6/6,T, fully aromatic polyamides and copolymers and blends of the listed polyamides. Preferably polyamide-6, polyamide-6,6 or polyamide-4,6 is chosen, or mixtures or copolyamides of the constituting monomers thereof.

The conductive additive are carbon fibres with diameters of preferably between 5 and 10 microns. The average length after processing, so in the final shaped article lies between 200 and 400, preferably between 250 and 300 microns. This length is obtained with the usual shaping processes when starting from carbon fibers having a length between 3 and 15 mm, usually between 5 and 10 mm. Depending on the required degree of conductivity the amount of fibres in the composition may range from 0.5 to 20 wt% with respect to the total composition.

Conductivity sufficient for electrostatic and electrolytic painting is already obtained with the preferred amount of between 1 and 15 wt% of the conductive additive and, expressed as the surface resistivity measured according ISO 60093-1980, may be between 10⁰ and 10⁴ Ohm/square. Preferably the surface resistivity is between 5*10⁰ and 5*10³ Ohm/square. It is noted here that the surface resistivity is the inverse of the surface conductivity.

The composition further comprises a polyamide oligomer. This oligomer is a low-molecular polyamide having a weight-average molecular weight that is preferably lower than the "molecular weight between entanglements" of the base polyamide in the composition. This "molecular weight between entanglements" is for example 5,000 g/mol in the case of polyamide-6. Preferably, the weight average molecular weight is at most 5,000 g/mol, preferably at most 4,000 g/mol, more preferably at most 3,000 g/mol. The molecular weight preferably is not too low either, to avoid the risk of for example the glass transition temperature being lowered. Preferably the weight-average molecular weight is greater than approximately 1,000 g/mol.

Preferably, the composition comprises a base polyamide with a molecular weight of at least 10,000 g/mol and an oligomer with a molecular weight of at most 5,000 g/mol.

More preferably, the composition comprises a base polyamide with a molecular weight of at least 15,000 g/mol and a polyamide oligomer with a molecular weight of at most 4,000 g/mol.

The composition according to the invention comprises 0.5-20 wt.% oligomer relative to the total amount of base polyamide and oligomer. It was found that an amount of 1-10 wt.%, relative to the total amount of base polyamide and oligomer, is sufficient to allow a significant reduction of the amount of conductive additive to obtain the desired conductivity or to a significant increase of the conductivity at a given amount of the additive.

The composition according to the invention may further comprise usual additives. Examples of such additives are flame-retardants, fillers, in particular mineral fillers, release agents and lubricants. Usually in automotive applications the composition may also contain glass fibres and fillers. In general the amount of base polyamide in the composition is between 40 and 95 wt%. Fillers may be present in an amount of up to 40 wt%, preferably between 10 and 40 wt% and glass fiber may be present in an amount up to 50 wt %, preferably between 5 and 50 wt%. Other functional additives may be present in the usual effective amounts as known in the art.

The composition according to the invention can be applied to form electrostatically and electrolytically paintable objects showing good paintability and when painted a metal like appearance and a smooth surface. Examples of such objects are external, internal and under-the-hood vehicle parts as mirror housings, door handles, fuel filler doors, brackets, roof rack components, liftgate handles, intake manifolds, engine, valve and cam covers.

The invention further relates to a process for painting a polyamide object applying an electric voltage to the object wherein the object comprises the composition according to the invention. Processes for painting conductive objects, applying an electric voltage are known per se and include powder coating and wet coat electrostatic spray painting.

If for some other reason before painting an object a primer has to be applied it has been found that the transfer of such primer to an object comprising the composition according to the invention is considerably more effective than the transfer to a non-conductive object. Usually, however, the application of a conductive primer can be avoided. This has favourable environmental and cost effect, since conductive primers usually contain hazardous polluting solvents that have to be recovered.

The invention will be elucidated by the following examples.

### Example I and Comparative Experiment A

Two polyamide compositions as specified in Table 1 were injection molded into a flat disc with dimensions of 5.0 cm in diameter and 3.0 mm in thickness. The surface resistivity of the two sheet was measured according to ISO 60093-1980. The values measured are also reported in Table 1. It appears that the surface resistivity for the sample containing the oligomer is lowered by a factor of about 23 compared to the composition not containing the oligomer.

**Table 1**

| | Example I | Comp. Experiment A |
|---|---|---|
| Component | wt% | wt% |
| Polyamide-6, ηᵣₑₗ of 2.35 (1 g/dl in formic acid at 25°) | 57.6 | 60 |
| Polyamide-4,6 oligomer, Mw 2000 | 2.4 | - |
| Acicular calcium stearate, L/D = 15:1. | 25 | 25 |
| 4 mm glass fibre, 10 µm diameter | 7 | 7 |
| Round carbon fibre, length 3.2 mm, diameter 7 µm | 8 | 8 |
| Surface resistivity (Ohm/square) | 520 | 12,000 |

## Claims

1. Conductive polyamide composition comprising a base polyamide, an electrically conductive additive and a polyamide oligomer, wherein the composition comprises from 0.5 to 20 wt.% polyamide oligomer relative to the total amount of base polyamide and oligomer and which conductive additive are carbon fibres with a diameter of between 3 and 20 microns.

2. Composition according to claim 1, wherein the polyamide oligomer has a weight average molecular weight M_{w} of between 1000 and 5000 g/mol.

3. Composition according to any of claims 1-2, wherein the polyamide oligomer is a polyamide-4,6 oligomer.

4. Composition according to any of claims 1-3, wherein the base polyamide is chosen from the group consisting of polyamide-6, polyamide-6,6 or polyamide 4,6, mixtures thereof and copolyamides of the constituting monomers thereof.

5. Composition according to any one of claims 1-4, wherein the additive is present in amount of 0.5 - 20 wt% of the total composition.

6. Composition according to any of claims 1-5 wherein the carbon fibre has a diameter of between 5 and 10 microns and a length of between 200 and 400 microns.

7. Composition according to any of claims 1-6, further comprising up to 40 wt% fillers and/or up to 50 wt% glass fibres.

8. Use of a composition according to anyone of claims 1-7 in electrostatically and electrolytically paintable objects.

9. Process for painting a polyamide object applying an electric voltage to the object wherein the object comprises the composition according to anyone of claims 1-7.

## Patentansprüche

1. Leitfähige Polyamidzusammensetzung, umfassend ein Basispolyamid, ein elektrisch leitfähiges Additiv und ein Polyamid-Oligomer, wobei die Zusammensetzung 0,5 bis 20 Gew.-% Polyamid-Oligomer, bezogen auf die Gesamtmenge an Basispolyamid und Oligomer, umfasst und es sich bei dem leitfähigen Additiv um Kohlefasern mit einem Durchmesser zwischen 3 und 20 Mikron handelt.

2. Zusammensetzung nach Anspruch 1, wobei das Polyamid-Oligomer ein gewichtsmittleres Molekulargewicht M_{w} zwischen 1000 und 5000 g/mol aufweist.

3. Zusammensetzung nach einem der Ansprüche 1-2, wobei es sich bei dem Polyamid-Oligomer um ein Polyamid-4,6-Oligomer handelt.

4. Zusammensetzung nach einem der Ansprüche 1-3, wobei das Basispolyamid aus der Gruppe bestehend aus Polyamid-6, Polyamid-6,6 oder Polyamid-4,6, Mischungen davon und Copolyamiden der konstituierenden Monomere davon ausgewählt ist.

5. Zusammensetzung nach einem der Ansprüche 1-4, wobei das Additiv in einer Menge von 0,5-20 Gew.-%, bezogen auf die gesamte Zusammensetzung, vorliegt.

6. Zusammensetzung nach einem der Ansprüche 1-5, wobei die Kohlefaser einen Durchmesser zwischen 5 und 10 Mikron und eine Länge zwischen 200 und 400 Mikron aufweist.

7. Zusammensetzung nach einem der Ansprüche 1-6, die ferner bis zu 40 Gew.-% Füllstoffe und/oder bis zu 50 Gew.-% Glasfasern umfasst.

8. Verwendung einer Zusammensetzung nach einem der Ansprüche 1-7 in elektrostatisch und elektrolytisch lackierbaren Objekten.

9. Verfahren zum Lackieren eines Polyamid-Objekts unter Anlegen einer elektrischen Spannung an das Objekt, wobei das Objekt die Zusammensetzung nach einem der Ansprüche 1-7 umfasst.

## Revendications

1. Composition de polyamide conducteur comprenant un polyamide de base, un additif électriquement conducteur et un oligomère de polyamide, la composition comprenant de 0,5 à 20 % en poids d'oligomère de polyamide, rapporté à la quantité totale de polyamide de base et d'oligomère, et l'additif conducteur étant constitué de fibres de carbone avec un diamètre compris entre 3 et 20 µm.

2. Composition selon la revendication 1, dans laquelle l'oligomère de polyamide a un poids moléculaire moyen en poids M_{w} compris entre 1000 et 5000 g/mol.

3. Composition selon l'une quelconque des revendications 1 et 2, dans laquelle l'oligomère de polyamide est un oligomère de polyamide-4,6.

4. Composition selon l'une quelconque des revendications 1 à 3, dans laquelle le polyamide de base est choisi dans le groupe constitué par le polyamide-6, le polyamide 6,6, le polyamide-4,6, les mélanges de ceux-ci, et les copolyamides de leurs monomères constitutifs.

5. Composition selon l'une quelconque des revendications 1 à 4, dans laquelle l'additif est présent dans une quantité de 0,5-20 % en poids de la composition totale.

6. Composition selon l'une quelconque des revendications 1 à 5, dans laquelle la fibre de carbone a un diamètre compris entre 5 et 10 µm et une longueur comprise entre 200 et 400 µm.

7. Composition selon l'une quelconque des revendications 1 à 6, comprenant en outre jusqu'à 40 % en poids de charges et/ou jusqu'à 50 % en poids de fibres de verre.

8. Utilisation d'une composition selon l'une quelconque des revendications 1 à 7 dans des objets pouvant être peints électrostatiquement et électrolytiquement.

9. Procédé pour peindre un objet en polyamide en appliquant une tension électrique à l'objet, l'objet comprenant la composition selon l'une quelconque des revendications 1 à 7.
